# EUROPEAN PATENT APPLICATION

(11) **EP 0 878 140 A2**
(43) Date of publication of application: **18.11.1998**
(21) Application number: 98303823.3
(22) Date of filing: 15.05.1998
(51) Int. Cl.: A41D 19/00

(54) **Glove manufacture**

(30) Priority: 15.05.1997 GB 9709819
(71) Applicant: Wilkey, Andrew William, Llantwit Major, South Glamorgan CF61 1UH (GB)
(72) Inventor: Wilkey, Andrew William, Llantwit Major, South Glamorgan CF61 1UH (GB)
(74) Representative: Gibson, Stewart Harry

(57) **Abstract**

A succession of pairs of gloves are formed, superimposed on a backing sheet web 20, by passing two superposed webs of plastics film 28,30 and 32,34 step-wise with the backing sheet web through a heated platen assembly 12 to 18. Between successive step-advancements of these webs, the platen assembly is actuated: glove-shaped heated platen 12 forms a glove in the two plastics films 28,30; the webs are then advanced one step and the platen assembly is actuated again, this time the glove-shaped platen 14 forming a glove in the two plastics films 32,34, superimposed over (and slightly larger than) the glove formed, in the previous actuation of the platen assembly, in the plastics film webs 28,30.

## Description

The present invention relates to a method and apparatus for manufacturing gloves from sheet plastics material, and in particular for manufacturing such gloves mounted on a backing sheet typically printed with instructions or other information.

It is known to form two gloves side-by-side on a backing sheet, by positioning two superposed layers of plastics film against a paper backing sheet, then impressing the two layers of plastics film and the backing sheet together using a heated platen. This platen defines the outline of two gloves side-by-side, and so bonds the two plastic films together and to the backing sheet, through the application of heat, along lines extending around the peripheries of the respective gloves. In practice, the backing sheet material and the plastics film are provided as webs wound on respective reels: these webs are advanced step-wise past the heated platen: after each such step-wise movement, the platen is applied to form a new pair of gloves. As the platen is released and the webs are advanced the next step, the waste plastics material around the gloves is removed: downstream of the platen, the backing sheet web is severed transversely at intervals, to provide a succession of pieces of backing sheet each carrying a pair of the gloves.

It is also known, in a modification of the above-described process, to form a succession of pairs of gloves on the advancing backing paper web,each pair of glovers consisting of two gloves one superimposed over the other. For this purpose, firstly two layers of plastics film and the backing sheet are impressed together using a heated platen defining the outline of one glove: then a further two layers of plastics film are impressed together using a second heated platen defining the outline of a slightly larger glove. The first platen causes the first two layers of plastics film to be bonded together around a peripheral line to form one glove secured to the backing sheet along that peripheral line. The second platen causes the second two layers of plastics film to be bonded together around a peripheral line extending just outside the peripheral line of the first glove, so forming a second glove of slightly larger size than the first glove, also secured to the backing sheet along its peripheral margin.

In order to form these superimposed pairs of gloves, an apparatus has been proposed which is a modification of the previously-mentioned apparatus used for forming gloves in pairs side-by-side. Thus, the latter apparatus had a platen assembly having two successive heated platens, arranged so that in a single stroke of the assembly a pair of gloves are formed spaced apart along the backing sheet, from two layers of plastics film. The modification proposed to this apparatus involved providing a second platen assembly, downstream of the first, this second assembly also having two successive heated platens (defining gloves slightly larger than the gloves defined by the two heated platens of the first assembly). The backing paper web advances through the first and second platen assemblies one-after-the-other. A first pair of plastics layers advances through the first platen assembly, where a pair of gloves are formed, spaced apart along the length of the backing sheet web, from that pair of plastics layers. Downstream of the first platen assembly, the waste plastics material is removed from around the gloves. The backing paper web, with its gloves, then advances into the second platen assembly: the second pair of plastics layers are also advanced through the second platen assembly. In a single stroke of the second platen assembly, another two gloves are formed from the second pair of superposed plastics layers, these two further gloves being formed on the backing sheet over the respective gloves which has been formed by the first platen assembly. Downstream of the second platen assembly, the waste plastics material is removed from around the further pair of gloves. The disadvantage of this apparatus is that the provision of the second platen assembly involves a very substantial increase in cost of the apparatus.

I have now devised an apparatus and method for forming a succession of superimposed pairs of gloves on a backing sheet web, which requires only a single platen assembly.

Thus, in accordance with the present invention, there is provided an apparatus for forming a succession of superimposed pairs of gloves on a backing sheet, the apparatus comprising a platen assembly having two successive heated platens each for applying heat and pressure along a line defining the peripheral margin of a glove, means for step-wise advancing a web of backing sheet material through said platen assembly together with four superposed layers of plastics film, and a separator disposed between a first pair of said plastics layers and the second pair of said plastics layers and overlying a first one of said heated platens.

In use, as the platen assembly is actuated each time, the first heated platen applies heat and pressure only to the first pair of plastics layers, to bond these together and to the backing sheet, along a line defining the periphery of a first glove. The webs of backing sheet and layers of plastics material are then advanced one step, to bring the glove just formed into register with the second heated platen: the platen assembly is now actuated again. This time, the second heated platen applies heat and pressure to all four layers of plastics material to bond these together and to the backing sheet, but along a line just outside the periphery of the glove formed in the previous step from the first pair of plastics layers, and already carried on the backing sheet. At the same time, the first heated platen forms a fresh glove from the first pair of plastics layers.

It will accordingly be appreciated that the apparatus forms a succession of superimposed pairs of gloves on a backing sheet, but includes only a single platen assembly.

Also in accordance with the present invention, there is provided a method of forming a succession of superimposed pairs of gloves on a backing sheet, the method comprising step-wise advancing a web of backing sheet material through a platen assembly together with four superposed layers of plastics film, the platen assembly comprising two successive heated platens defining the peripheral outlines of respective gloves, and a separator being provided between first and second pairs of said layers of plastics film in register with the first heated platen, and the method further comprising actuating the platen assembly between successive step-wise advancements of said web of backing sheet and layers of plastics material, such that, on each actuation of the platen assembly, the first heated platen applies heat and pressure to the first pair of layers of plastics film to bond these together and to the backing sheet along a line defining the periphery of a glove, and the second heated platen applies heat and pressure to all four layers of plastics material to bond these together and to the backing sheet along a line defining the periphery of a second glove but outwardly of the periphery of a glove formed on the backing sheet from the first pair of layers of plastics material during the previous actuation of the platen assembly.

An embodiment of the present invention will now be described by way of example only and with reference to the accompanying drawings, in which:
FIGURE 1 is a schematic elevation of an apparatus in accordance with the invention;
FIGURE 2 is an enlarged schematic view of the platen assembly of the apparatus of Figure 1; and
FIGURE 3 is a plan view to show the gloves which are formed upon each actuating stroke of the platen assembly.

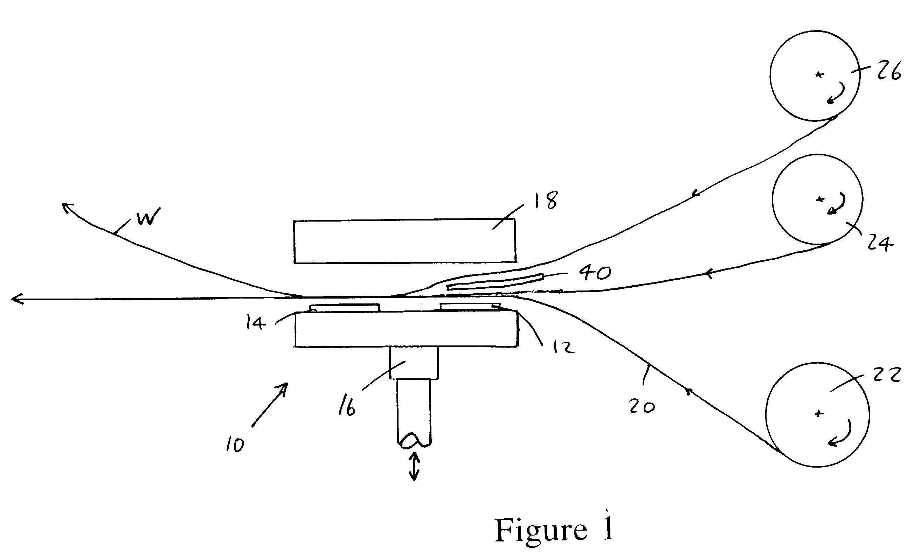

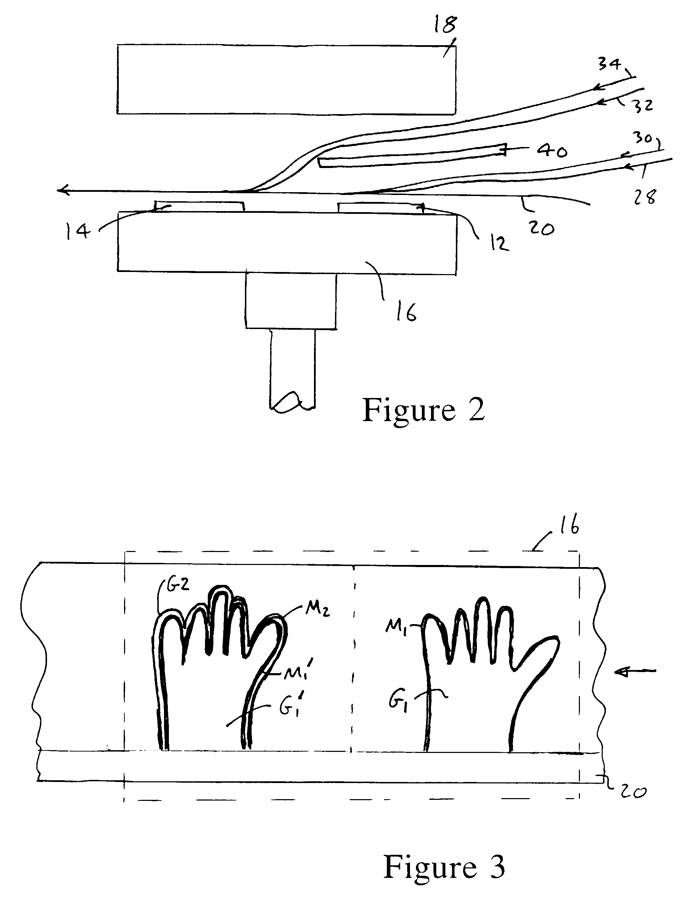

Referring to Figure 1 of the drawings, an apparatus in accordance with the present invention comprises a platen assembly 10 having two heated platens 12,14 mounted one-after-the-other, on a path through the assembly, on a reciprocally movable actuator 16, and a fixed reaction plate 18 overlying the platens 12,14. A web of backing paper 20 is wound on a reel 22 and is passed lengthwise of itself through the assembly 10, between the platens 12,14 and the plate 18. Two reels 24,26 are also provided, wound with webs of plastics film: in this case each web is folded in half along a central, longitudinal line, to provide two superposed layers of film, as shown at 28,30 and 32,34 in Figure 2. Instead however, the two reels 24,26 may be replaced by four reels each wound with a single, unfolded web of plastics film, the webs being drawn from these reels and then brought together to provide two pairs of superposed layers.

As shown in Figure 2, the first two layers of plastics film 28,30 pass through the platen assembly 10 superimposed over the backing paper web 20. Further, the second two layers of plastics film 32,34 pass through the platen assembly 10 superimposed over the first two layers 28,30. However, a thin separator 40 projects into the platen assembly between the first two layers of plastics film 28,30 and the second two layers of plastics film 32,34: the separator 40 overlies the first heated platen 12 but not the second heated platen 14.

In use of the apparatus, the webs of paper and plastics film are advanced step-wise through the platen assembly 10. At the end of each step advancement, the actuator 16 carries out a stroke, to press the heated platens against the reaction plate 18 and then retract. The first heated platen 12 applies heat and pressure along a line which defines the periphery or outline of a first glove, thus bonding the first two layers of plastics film 28,30 together and to the backing paper 20 around this peripheral line, to form a first glove bonded to the backing paper 20. However, the separator 40 prevents heat from the platen 12 reaching the second two layers of plastics film 32,34 and so prevents these being bonded together by the first platen 12.

The next step-advancement of the webs of paper and plastics brings the glove, just formed from layers 28,30, into register with the second heated platen 14. The actuator 16 now carries out its stroke, the second heated platen 14 applying heat and pressure to all four plastics layers 28,30,32,34 to bond them together and to the backing paper, along a line just outside the periphery of the glove already formed from the first two plastics layers 28,30. Thus, a second glove is formed from the second two plastics layers 32,34, slightly larger than the first glove and superimposed over it. At the same time, the first heated platen 12 forms a fresh glove (as described previously) from the first two plastics layers 28,30: at the next advancement of the webs of paper and plastics through the platen assembly, this fresh glove will be brought into register with the second heated platen 14, for a second glove to be formed over it.

The backing paper web 20 advances downstream from the platen assembly, carrying a succession of superimposed pairs of disposable gloves. A web of waste material W, i.e. the area of plastics film around the gloves, is peeled away from the backing paper web, as shown. Downstream, the backing paper web is severed between the successive superimposed pairs of gloves.

Figure 3 shows diagrammatically the gloves which are formed on each stroke of the actuator 16 of the apparatus. Thus, a glove G₁ is formed by the heated platen 12, the two plastics layers 28,30 being adhered together and to the backing paper 20 along a margin M₁ which extends around the periphery of the glove, except across the wrist-end of the glove. Downstream of this, the second heated platen 14 formes a glove G₂ from the second two plastics layers 32,34 bonding these two layers together and to the backing sheet along a margin M₂ which extends around the periphery of this glove (except across the wrist-end of the glove): this margin M₂ lies just outside the margin M₁' of a glove G₁' which has already been formed on the backing sheet by the platen 12, from the first two plastics layers 28,30, during the immediately preceding stroke of the actuator 16. It will be appreciated that between each stroke of the actuator 16, the webs of backing paper and plastics film are advanced by a distance corresponding to the centre-to-centre spacing of the two heated platens 12,14.

## Claims

1. An apparatus for forming a succession of superimposed pairs of gloves on a backing sheet, the apparatus comprising a platen assembly having two successive heated platens each for applying heat and pressure along a line defining the peripheral margin of a glove, means for step-wise advancing a web of backing sheet material through said platen assembly together with four superimposed layers of plastics film, and a separator disposed between a first pair of said plastics layers and overlying a first one of said heated platen.

2. An apparatus as claimed in claim 1, further comprising means disposed downstream of said platen assembly for peeling, away from said web of backing sheet material, a web of waste material which is formed around said gloves from said superposed layers of plastics film.

3. An apparatus as claimed in claim 1 or 2, further comprising means disposed downstream of said platen assembly for severing said web of backing sheet material between the successive superimposed pairs of gloves.

4. A method of forming a succession of superimposed pairs of gloves on a backing sheet, the method comprising step-wise advancing a web of backing sheet material through a platen assembly together with four superposed layers of plastics film, the platen assembly comprising two successive heated platens defining the peripheral outlines of respective gloves, and a separator being provided between first and second pairs of said layers of plastics film in register with the first heated platen, and the method further comprising actuating the platen assembly between successive step-wise advancements of said web of backing sheet and layers of plastics material, such that, on each actuation of the platen assembly, the first heated platen applies heat and pressure to the first pair of layers of plastics film to bond these together and to the backing sheet along a line defining the periphery of a glove, and the second heated platen applies heat and pressure to all four layers of plastics material to bond these together and to the backing sheet along a line defining the periphery of a second glove but outwardly of the periphery of a glove formed on the backing sheet from the first pair of layers of plastics material during the previous actuation of the platen assembly.

5. A method as claimed in claim 4, in which the layers of plastics film of at least one said pair are formed from a single web of plastics film folded over along a longitudinal line.

6. A method as claimed in claim 4 or 5, in which a web of waste material, formed around said gloves from said superposed layers of plastics film, is peeled away from said web of backing sheet material downstream of said platen assembly.

7. A method as claimed in any one of claims 4 to 6, in which said web of backing sheet material is severed, downstream of said platen assembly, between the successive superimposed pairs of gloves.
